# EUROPÄISCHE PATENTSCHRIFT

(11) **EP 3 915 164 B1**
(45) Veröffentlichungstag und Bekanntmachung des Hinweises auf die Patenterteilung: **16.07.2025**
(21) Anmeldenummer: 20700465.6
(22) Anmeldetag: 09.01.2020
(51) Int. Cl.: H01M 8/18, H01M 8/2484, H01M 8/249

(54) **VERTEILERMODUL ZUM VERBINDEN VON ZELLEN EINES ZELLSTACKS UND ZELLSTACK MIT EINEM VERTEILERMODUL**
DISTRIBUTOR MODULE FOR CONNECTING CELLS OF A CELL STACK, AND CELL STACK HAVING A DISTRIBUTOR MODULE
MODULE DE DISTRIBUTION POUR RELIER LES ÉLÉMENTS D'UN EMPILEMENT D'ÉLÉMENTS ET L'EMPILEMENT D'ÉLÉMENTS À UN MODULE DE DISTRIBUTION

(30) Priorität: 22.01.2019 DE 102019101474
(43) Veröffentlichungstag der Anmeldung: 01.12.2021
(73) Patentinhaber: Volterion GmbH & Co. KG, 44263 Dortmund (DE)
(72) Erfinder: SEIPP, Thorsten, 45481 Mülheim an der Ruhr (DE); BERTHOLD, Sascha, 46045 Oberhausen (DE); BOTHE, Kai, 40822 Mettmann (DE); ALBERT, Andreas, 44225 Dortmund (DE); LUETH, Thomas, 79104 Freiburg (DE)
(74) Vertreter: Cohausz & Florack
(86) Internationale Anmeldenummer: PCT/EP2020/050395
(87) Internationale Veröffentlichungsnummer: WO 2020/151953

(56) Entgegenhaltungen:
- US-A1- 2013 157 097

## Beschreibung

Die Erfindung betrifft ein Verteilermodul zum Verbinden von Zellen eines Zellstacks einer Redox-Flow-Batterie, mit einer Oberseite, einer Unterseite und einer zwischen der Oberseite und der Unterseite um das Verteilermodul umlaufenden Schmalseite und mit zwei Zuführkanälen zum Zuführen zweier unterschiedlicher Zuführelektrolyte zu den Zellen des Zellstacks und/oder mit zwei Abführkanälen zum Abführen zweier separater Abführelektrolyte aus den Zellen des Zellstacks, wobei die Zuführkanäle und/oder die Abführkanäle untereinander jeweils unverbunden sind. Ferner betrifft die Erfindung einen Zellstack einer Redox-Flow-Batterie mit wenigstens einem Verteilermodul umfassend zwei Zuführkanäle zum Zuführen zweier unterschiedlicher Zuführelektrolyte zu den Zellen des Zellstacks und/oder zwei Abführkanäle zum Abführen zweier separater Abführelektrolyte aus den Zellen des Zellstacks.

Redox-Flow-Batterien sind bereits in verschiedenen Ausführungen bekannt. Solche Ausführungen sind beispielhaft in der AT 510 250 A1 und der US 2004/0170893 A1 beschrieben. Ein wichtiger Vorteil der Redox-Flow-Batterien liegt in ihrer Eignung, sehr große Mengen an elektrischer Energie speichern zu können. Die Energie wird dabei in Elektrolyten gespeichert, die platzsparend in sehr großen Tanks bereitgehalten werden können. Die Elektrolyte weisen meist metallische Ionen unterschiedlicher Oxidationsstufen auf. Zur Entnahme von elektrischer Energie aus den Elektrolyten oder zum Wiederaufladen derselben werden die Elektrolyte durch sogenannte elektrochemische Zellen gepumpt. Im Folgenden wird der Einfachheit halber anstelle des Begriffs elektrochemische Zelle lediglich der Begriff Zelle verwendet.

Die Zelle wird dabei aus zwei Halbzellen gebildet, die über eine Membran voneinander getrennt sind und jeweils einen Zellinnenraum, einen Elektrolyt und eine Elektrode umfassen. Die Membran ist semipermeabel und hat die Aufgabe, Kathode und Anode einer elektrochemischen Zelle räumlich und elektrisch voneinander zu trennen. Dazu muss die Membran für bestimmte Ionen durchlässig sein, welche die Umwandlung der gespeicherten chemischen Energie in elektrische Energie bewirken. Membrane können beispielsweise aus mikroporösen Kunststoffen oder Polyethylen gebildet werden. Grundsätzlich kommen alle Kunststoffe in Frage, die ladungsselektiv sind, d.h. entweder nur Anionen oder nur Kationen durchlassen. An beiden Elektroden der Zelle, also an der Anode und an der Kathode, laufen Redox-Reaktionen ab, wobei von den Elektrolyten an einer Elektrode Elektronen freigesetzt und an der anderen Elektrode Elektronen aufgenommen werden. Die metallischen und/oder nichtmetallischen Ionen der Elektrolyte bilden Redox-Paare und erzeugen folglich ein Redox-Potential. Als Redox-Paare kommen beispielsweise Eisen-Chrom, Polysulfid-Bromid, Vanadium oder andere Schwermetalle in Frage. Diese oder auch andere Redox-Paare können grundsätzlich in wässriger oder nichtwässriger Lösung vorliegen. Als Elektrolyte kommen aber auch redoxaktive organische Stoffe, wie beispielsweise Anthrachinon, in Frage.

Die Elektroden einer Zelle, zwischen denen sich infolge der Redoxpotentiale eine Potentialdifferenz ausbildet, sind außerhalb der Zelle, z.B. über einen elektrischen Verbraucher, elektrisch miteinander verbunden. Während die Elektronen außerhalb der Zelle von einer Halbzelle zur anderen gelangen, treten Ionen der Elektrolyte durch die Membran direkt von einer Halbzelle zur anderen Halbzelle über. Zum Wiederaufladen der Redox-Flow-Batterie kann an die Elektroden der Halbzellen anstelle des elektrischen Verbrauchers, beispielsweise mittels eines Ladegeräts, eine Potentialdifferenz angelegt werden, durch welche die an den Elektroden der Halbzellen ablaufenden Redox-Reaktionen umgekehrt werden.

Zur Bildung der beschriebenen Zelle werden Zellrahmen verwendet, die einen Zellinnenraum umlaufend umschließen. Jede Halbzelle umfasst dabei einen derartigen Zellrahmen, der meist im Spritzgießverfahren aus einem thermoplastischen Kunststoff hergestellt wird. Zwischen zwei Zellrahmen wird die Membran angeordnet, die Elektrolyte der Halbzellen in Bezug auf einen konvektiven Stoffaustausch voneinander trennt, eine Diffusion bestimmter Ionen von einer Halbzelle in die andere Halbzelle aber zulässt. Den Zellinnenräumen wird zudem jeweils eine Elektrode derart zugeordnet, dass diese mit den die Zellinnenräume durchströmenden Elektrolyten in Kontakt stehen. Die Elektroden können beispielsweise den Zellinnenraum eines jeden Zellrahmens auf der Membran abgewandten Seite abschließen. Jeder Zellrahmen weist Öffnungen und Kanäle auf, durch welche der entsprechende Elektrolyt von einer Versorgungsleitung in den jeweiligen Zellinnenraum strömen und von dort wieder abgezogen sowie einer Entsorgungsleitung zugeführt werden kann. Die Elektrolyte der Halbzellen werden dabei über die Versorgungsleitung und die Entsorgungsleitung von einem Vorlagebehälter in einen Sammelbehälter umgepumpt. Dies erlaubt eine erneute Verwendung der Elektrolyte, die folglich weder verworfen noch ersetzt werden müssen.

Bedarfsweise wird eine Mehrzahl gleichartiger Zellen in einer Redox-Flow-Batterie zusammengefasst. Meist werden die Zellen dazu aufeinandergestapelt, weshalb man die Gesamtheit der Zellen auch als Zellstapel oder Zellstack bezeichnet. Die einzelnen Zellen werden meist parallel zueinander von den Elektrolyten durchströmt, während die Zellen meist elektrisch hintereinander geschaltet werden. Die Zellen sind also meist hydraulisch parallel und elektrisch in Reihe geschaltet. In diesem Fall ist der Ladungszustand der Elektrolyte in jeweils einer der Halbzellen des Zellstapels gleich.

Zur Verteilung der Elektrolyte auf die entsprechenden Halbzellen des Zellstacks und zur gemeinsamen Abführung der Elektrolyte aus den jeweiligen Halbzellen sind Halbzellen untereinander mit Kanälen verbunden. Da jede Halbzelle bzw. jeder Zellinnenraum einer Zelle von einem anderen Elektrolyt durchströmt wird, müssen die beiden Elektrolyte während des Durchtritts durch den Zellstack voneinander getrennt werden. In den Zellrahmen bzw. Zellrahmenelementen sind dazu in der Regel vier Bohrungen vorgesehen, die in jedem Zellrahmenelement und/oder im Zellstack einen Kanal senkecht zur jeweiligen Zelle, zum jeweiligen Zellinnenraum und/oder längs des Zellstacks bilden. Jeweils zwei der Kanäle dienen dem Zuführen zweier unterschiedlicher Elektrolyte, die als Zuführelektrolyte bezeichnet werden können, und dem Abführen zweier unterschiedlicher Elektrolyte, die als Abführelektrolyte bezeichnet werden können, und den Zuführelektrolyten nach der erfolgten Redoxreaktion in den Zellen entsprechen. Dabei wird über einen Kanal der Zuführelektrolyt zum Zellinnenraum zugeführt und nach der Reaktion im Zellinnenraum über einen anderen Kanal der Abführelektrolyt abgeführt. Dies gilt für beide Elektrolyte bzw. Halbzellen ebenso wie für den gesamten Zellstack. Wird die Strömungsrichtung der Elektrolyte umgekehrt, etwa um die Redox-Flow-Batterie wieder aufzuladen, stellen die früheren Abführelektrolyte die neuen Zuführelektrolyte dar, wodurch die früheren Zuführelektrolyte zu den neuen Abführelektrolyten werden.

Die Elektrolyte der Redox-Flow-Batterie werden dabei stets voneinander getrennt gehalten und in zwei oder vier Vorlagebehältern separat gesammelt. Im Falle von vier Vorlagebehältern wird jeweils der positive Elektrolyt und der negative Elektrolyt von einem Vorlage Behälter durch die Redox-Flow-Batterie in einen anderen Vorlagebehälter gepumpt. Im Falle von lediglich zwei Vorlagebehältern wird jeweils der positive Elektrolyt aus einem Vorlagebehälter durch die Redox-Flow-Batterie und zurück in denselben Vorlagebehälter gepumpt. Je nachdem ob die Redox-Flow-Batterie Strom abgeben oder speichern soll, kann die Stromrichtung umgekehrt werden. Eine Umkehrung der Strömungsrichtung der Elektrolyte ist dabei nicht erforderlich.

Das Verteilermodul weist dabei eine Oberseite, eine Unterseite und eine zwischen der Oberseite und der Unterseite um das Verteilermodul umlaufende Schmalseite auf. Ferner beherbergt das Verteilermodul zwei separate Zuführkanäle für die Zuführelektrolyte und zwei separate Abführkanäle für die Abführelektrolyte. Die Zuführkanäle und die Abführkanäle sind so voneinander getrennt, dass sich die Elektrolyte nicht vermischen können. Ein Verteilermodul ist bereits aus der US 2013/157097 A1 bekannt.

Je größer die Zellstacks der Redox-Flow-Batterie werden bzw. je mehr Zellstacks eine Redox-Flow-Batterie aufweist, desto höher wird der Aufwand für die Verrohrung für das Zuführen und das Abführen der Elektrolyte. Dies führt einerseits zu einer überproportionalen Steigerung der Fertigungskosten und andererseits zu einer erheblichen Verlängerung der Montagezeiten, was beides die Wirtschaftlichkeit verringert.

Daher liegt der vorliegenden Erfindung die Aufgabe zugrunde, das Verteilermodul und den Zellstack jeweils der eingangs genannten und zuvor näher beschriebenen Art, derart auszugestalten und weiterzubilden, dass die Wirtschaftlichkeit großer und leistungsfähiger Redox-Flow-Batterien verbessert werden kann.

Diese Aufgabe ist bei einem Verteilermodul nach dem Oberbegriff von Anspruch 1 dadurch gelöst, dass die Zuführkanäle jeweils wenigstens einen Aufnahmeanschluss zum Aufnehmen von Zuführelektrolyt und wenigstens zwei Abgabeanschlüsse zum Abgeben von Zuführelektrolyt an wenigstens zwei Teilzellstacks miteinander verbindend und/oder die Abführkanäle jeweils wenigstens zwei Aufnahmeanschlüsse zum Aufnehmen von Abführelektrolyt von den wenigstens zwei Teilzellstacks und wenigstens einen Abgabeanschluss zum Abgeben von Abführelektrolyt miteinander verbindend ausgebildet sind, dass jeweils ein Aufnahmeanschluss der Zuführkanäle und/oder jeweils ein Abgabeanschluss der Abführkanäle an der Schmalseite vorgesehen ist und dass jeweils wenigstens ein Abgabeanschluss der Zuführkanäle und/oder jeweils wenigstens ein Aufnahmeanschluss der Abführkanäle an der Oberseite vorgesehen ist.

Die genannte Aufgabe ist zudem bei einem Zellstack nach dem Oberbegriff von Anspruch 11 dadurch gelöst, dass wenigstens zwei Teilzellstacks über wenigstens ein Verteilermodul nach einem der Ansprüche 1 bis 10 hydraulisch miteinander verbunden sind.

Durch das entsprechende Verteilermodul können die Zellen des Zellstacks ohne Weiteres in mehrere Teilzellstacks aufgeteilt werden, die dann über das Verteilermodul oder mehrere Verteilermodule der beschriebenen Art sehr einfach und schnell hydraulisch miteinander verbunden werden können. Auf diese Weise wird die Montage eines Zellstacks einer Redox-Flow-Batterie vereinfacht und beschleunigt, was die Montagekosten senkt. Zudem lassen sich die Verteilermodule kostengünstig vorfertigen, was die Wirtschaftlichkeit der Redox-Flow-Batterien weiter verbessert.

Hierzu ist es jedoch erforderlich, dass die Verbindungsmodule ein bestimmtes Design aufweisen. So sind wenigstens zwei Zuführkanäle vorgesehen, von denen jeder Zuführkanal von einem anderen Zuführelektrolyt durchströmt werden kann, ohne dass sich die Zuführelektrolyte untereinander oder mit Abführelektrolyten mischen. Alternativ oder zusätzlich sind zwei Abführkanäle vorgesehen, die jeweils von einem anderen Abführelektrolyt durchströmt werden können, ohne dass es dabei zu einem Vermischen mit einem anderen Elektrolyt kommt. Dabei weisen die Zuführkanäle jeweils wenigstens einen Aufnahmeanschluss zum Aufnehmen von Zuführelektrolyt und wenigstens zwei Abgabeanschlüsse zum Abgeben des über den wenigstens einen Aufnahmeanschluss aufgenommenen Zuführelektrolyts an wenigstens zwei Teilzellstacks auf. Mithin weist der Zuführkanal in der Strömungsrichtung vorzugsweise wenigstens eine Verzweigung des Zuführkanals auf, um den zugeführten Zuführelektrolyt auf zwei Teilzellstacks aufteilen zu können. Alternativ oder zusätzlich weisen die Abführkanäle jeweils wenigstens zwei Aufnahmeanschlüsse zum Aufnehmen von Abführelektrolyt von den wenigstens zwei Teilzellstacks und wenigstens einen Abgabeanschluss zum Abgeben von Abführelektrolyt auf. Die Aufnahmeanschlüsse und der wenigstens eine Abgabeanschluss der Abführkanäle sind vorzugsweise jeweils über eine Zusammenführung für den entsprechenden Abführelektrolyten verbunden, um den separat zugeführten Abführelektrolyten gemeinsam bzw. gesammelt abgeben zu können.

Obwohl das Verteilermodul wie die Zellen der Teilzellstacks von den Elektrolyten durchströmt werden, unterscheidet sich das Verteilermodul von den Zellen der Teilzellstacks. Während die Elektrolyte in den Zellen über die Membran so miteinander verbunden sind, dass wenigstens Ionen von einem Elektrolyt in das andere Elektrolyt übergehen können, bleiben die Elektrolyte in dem Verteilermodul getrennt voneinander und werden lediglich im Verteilermodul verteilt, insbesondere auf die Teilzellstacks aufgeteilt bzw. von den Teilzellstacks gesammelt.

Damit die mehreren Teilzellstacks problemlos mit dem wenigstens einen Verteilermodul verbunden werden können, sind jeweils ein Aufnahmeanschluss der Zuführkanäle und/oder jeweils ein Abgabeanschluss der Abführkanäle an der Schmalseite vorgesehen, wobei jeweils wenigstens ein Abgabeanschluss der Zuführkanäle und/oder jeweils wenigstens ein Aufnahmeanschluss der Abführkanäle an der Oberseite vorgesehen ist. Dabei sind die Abgabeanschlüsse und/oder Aufnahmeanschlüsse der Einfachheit halber als Öffnungen ausgebildet. Es können aber die Aufnahmeanschlüsse und/oder die Abgabeanschlüsse als Anschlüsse mit zugeordneten Verschlussmitteln und/oder als, insbesondere standardisierter, Anschlussstutzen ausgebildet sein.

Es ergibt sich daraus, dass das Verteilermodul vermeintlich kontraproduktiv recht kompliziert ausgebildet und recht aufwendig in der Herstellung ist. Es hat sich jedoch gezeigt, dass die eigentliche Montage des Zellstacks aus wenigstens zwei Teilzellstacks und wenigstens einem Verteilermodul sehr einfach, schnell und kostengünstig erfolgen kann. Dies ist umso mehr der Fall, weil die Verteilermodule, insbesondere als gleichartige Module, vorgefertigt werden können.

Das Verteilermodul muss keine ausgewiesene Oberseite oder Unterseite aufweisen. Das Verteilermodul kann also prinzipiell in unterschiedlichen Ausrichtungen in einen Zellstack integriert werden. Vorliegend wird jedoch des einfacheren Verständnisses halber und zur Vermeidung unnötiger Wiederholungen von einer Oberseite und einer Unterseite gesprochen. Wenn nur an der Schmalseite und einer anderen Seite Abgabeanschlüsse und Aufnahmeanschlüsse vorgesehen sein sollten, dann wird diese eine andere Seite definitionsgemäß als die Oberseite angesehen, und zwar unabhängig davon, ob diese andere Seite tatsächlich nach oben oder eher nach unten bzw. zur Seite weist. Der Begriff der Oberseite bietet sich aber dennoch an, da es in diesem Fall konstruktiv und von der Montage her besonders bevorzugt ist, die definitionsgemäße Oberseite tatsächlich nach oben weisen zu lassen und einen Teilzellstack auf dieser Oberseite aufzubauen bzw. an dieser Oberseite nach oben hin anzuschließen.

Wenn in einem Verteilermodul die zwei Zuführkanäle und die zwei Abführkanäle eines Zellstacks integriert werden, kann grundsätzlich auch auf weitere Verteilermodule für den Aufbau des Zellstacks und/oder von Teilzellstacks verzichtet werden. Allerdings wird so die Ausgestaltung der Verteilermodule relativ komplex und aufwendig. Einfacher können die Verteilermodule ausgebildet werden, wenn die Zuführkanäle und die Abführkanäle in unterschiedlichen Verteilermodulen eines Zellstacks und/oder eines Teilzellstacks vorgesehen sind. Dann werden die Zuführelektrolyte über die Zuführkanäle eines Verteilermoduls zugeführt und die Abführelektrolyte über die Abführkanäle eines anderen Verteilermoduls abgeführt. Dies ändert jedoch nichts daran, dass die unterschiedlichen Verteilermodule gleichartig oder gar identisch ausgebildet werden können. Der Unterschied besteht dann im Wesentlichen darin, dass durch die Kanäle des einen Verteilermoduls die Zuführelektrolyte strömen, weshalb es sich dabei um die Zuführkanäle handelt, während durch die Kanäle des anderen Verteilermoduls die Abführelektrolyte strömen, weshalb es sich dabei um die Abführkanäle handelt.

Bei einer ersten besonders bevorzugten Ausgestaltung des Verteilermoduls ist jeweils wenigstens ein Abgabeanschluss der Zuführkanäle und/oder jeweils wenigstens ein Aufnahmeanschluss der Abführkanäle an der Unterseite vorgesehen. Dies erlaubt es, einen weiteren Teilzellstack platzsparend nach unten weisend an das Verteilermodul anzuschließen. Es kann also beispielsweise vorgesehen sein, dass die Zuführelektrolyte zentral über das Verteilermodul zugeführt und/oder die Abführelektrolyte zentral über das Verteilermodul abgeführt werden. Dabei können der Raum oberhalb und der Raum unterhalb des Verteilermoduls zur Positionierung von separaten Teilzellstacks genutzt werden, was platzsparend sein kann.

Alternativ oder zusätzlich kann aber auch jeweils wenigstens ein Abgabeanschluss der Zuführkanäle und/oder jeweils wenigstens ein Aufnahmeanschluss der Abführkanäle an der Schmalseite vorgesehen sein. Dies erlaubt es, einen weiteren separaten Teilzellstack über die Schmalseite an das Verteilermodul anzubinden, um den Bauraum um das Verteilermodul herum besser ausnutzen zu können. Alternativ oder zusätzlich kann so mit dem einen Verteilermodul über die Schmalseite ein weiteres Verteilermodul verbunden werden. Dieses weitere Verteilermodul kann dann ebenfalls an der Oberseite und/oder an der Unterseite und/oder an der Schmalseite mit wenigstens einem weiteren separaten Teilzellstack verbunden sein. So wird beispielsweise ein modularer Aufbau des Zellstacks bzw. der Redox-Flow-Batterie möglich, um modular so viele Teilzellstacks zu einem Zellstack verschalten zu können, wie dies für einen Anwendungsfall jeweils gewünscht oder erforderlich ist.

Um eine räumliche Behinderung der Teilzellstacks zu vermeiden und/oder den zur Verfügung stehenden Bauraum optimal ausnutzen zu können, bietet es sich an, wenn der wenigstens eine Abgabeanschluss und der wenigstens eine Aufnahmeanschluss der einzelnen Zuführkanäle und/oder der wenigstens eine Aufnahmeanschluss und der wenigstens eine Abgabeanschluss der einzelnen Abführkanäle an gegenüberliegenden Abschnitten der Schmalseiten vorgesehen sind. Wenn die Oberseite und/oder die Unterseite des Verteilermoduls groß genug und vorzugsweise rechteckig ausgebildet ist, kann es weiter bevorzugt sein, wenn an drei oder gar vier über den Umfang des Verteilermoduls verteilten Abschnitten jeweils zwei Aufnahmeanschlüsse und zwei Abgabeanschlüsse der Zuführkanäle und/oder der Abführkanäle vorgesehen sind. Dann können an mehreren Seiten, beispielsweise drei Seiten, des Verteilermoduls Teilzellstacks über die Schmalseite angeschlossen werden. Bedarfsweise können dann an der vierten Seite des Verteilermoduls die Vorlagebehälter der Zuführelektrolyte und der Abführelektrolyte oder ein weiteres Verteilermodul angeschlossen werden.

Um die Zuführelektrolyte und/oder Abführelektrolyte jeweils separat durch das Verteilermodul leiten zu können, kann das Verteilermodul so ausgebildet sein, dass in einer Projektion auf die Oberseite oder die Unterseite wenigstens eine Kreuzung zwischen jeweils zwei der Zuführkanäle und/oder zwei der Abführkanäle vorgesehen ist. So kann über die Kreuzung ein Zuführkanal über einen anderen Zuführkanal oder einen Abführkanal bzw. ein Abführkanal über einen anderen Abführkanal oder einen Zuführkanal geführt werden. So kann weiter ein platzsparendes Verteilermodul bereitgestellt werden. Besonders bevorzugt ist es aus denselben Gründen, wenn wenigstens zwei Kreuzungen zwischen jeweils zwei der Zuführkanäle und/oder zwei der Abführkanäle vorgesehen sind. Ob sich an den Kreuzungen Zuführkanäle mit Zuführkanälen oder Abführkanäle mit Abführkanälen oder Zuführkanäle mit Abführkanälen kreuzen, spielt dabei eine eher untergeordnete Rolle. Welche Arten von Kreuzungen im Einzelnen bevorzugt sein können, hängt dabei beispielsweise von der geplanten Anbindung der Teilzellstacks oder anderen geometrischen Vorgaben ab.

Um eine möglichst gleichartige und/oder möglichst symmetrische Anbindung von Teilzellstacks an die Oberseite und an die Unterseite des Verteilermoduls erreichen zu können, bietet es sich an, wenn in einer Projektion auf die Oberseite oder auf die Unterseite wenigstens ein Paar an der Oberseite und an der Unterseite vorgesehener Aufnahmeanschlüsse wenigstens eines Abführkanals wenigstens im Wesentlichen einander überdeckend angeordnet sind. So können beispielsweise die Aufnahmeanschlüsse eines Abführkanals etwa an derselben Stelle des Verteilermoduls vorgesehen sein und nur einmal nach oben und einmal nach unten weisen. Zusätzlich oder alternativ, kann in einer Projektion auf die Oberseite oder auf die Unterseite wenigstens ein Paar an der Oberseite und an der Unterseite vorgesehener Abgabeanschlüsse wenigstens eines Zuführkanals wenigstens im Wesentlichen einander überdeckend angeordnet sein. So können beispielsweise die Abgabeanschlüsse eines Zuführkanals etwa an derselben Stelle des Verteilermoduls vorgesehen sein und nur einmal nach oben und einmal nach unten weisen. Beispielswiese können die einander zugeordneten Abgabeanschlüsse oder Aufnahmeanschlüsse jeweils derselben Ecke eines rechteckigen und flach ausgebildeten Verteilermoduls zugeordnet sein, und zwar einmal an der Oberseite und einmal an der Unterseite.

Die Anbindung der Teilzellstacks kann einfach und platzsparend erfolgen, wenn in einer Projektion auf die Oberseite oder auf die Unterseite wenigstens ein Aufnahmeanschluss wenigstens eines Abführkanals und/oder wenigstens ein Abgabeanschluss wenigstens eines Zuführkanals einer Ecke des Verteilermoduls zugeordnet ist. Über die entsprechenden Ecken kann dann das Zuführelektrolyt einfach auf die Zellen des entsprechenden Teilzellstacks verteilt werden. Analog kann das Abführelektrolyt der Zellen des Teilzellstacks über die Ecken einfach gesammelt und abgeführt werden.

Um eine Anbindung der Teilzellstacks an der Oberseite und der Unterseite auf identische oder wenigstens gleichartige Weise zu ermöglichen, um somit die Flexibilität für das Aufbauen des Zellstacks zu erhöhen, kann es zweckmäßig sein, wenn sich in einer Projektion auf die Oberseite oder auf die Unterseite wenigstens ein Aufnahmeanschluss wenigstens eines Abführkanals und/oder wenigstens ein Abgabeanschluss wenigstens eines Zuführkanals einer Ecke des Verteilermoduls einander wenigstens teilweise, insbesondere kongruent, überdecken. Gleichwohl sind die sich in der entsprechenden Projektion wenigstens teilweise überdeckenden Abgabeanschlüsse und/oder Aufnahmeanschlüsse einmal an der Oberseite und einmal an der Unterseite angeordnet. Die sich überdeckenden Abgabeanschlüsse und/oder Aufnahmeanschlüsse können dabei denselben Zuführkanälen und/oder denselben Abführkanälen oder aber jeweils unterschiedlichen Zuführkanälen und/oder Abführkanälen zugeordnet sein. Auf diese Weise können die entsprechenden Anschlüsse bedarfsweise etwa symmetrisch, und zwar insbesondere etwa punktsymmetrisch oder etwa spiegelsymmetrisch, zueinander angeordnet sein.

Zur Verteilung des Zuführelektrolyts im Verteilermodul zu den Teilzellstacks bietet es sich an, wenn wenigstens ein Zuführkanal eine Gabelung zur Aufteilung des Zuführelektrolyts in wenigstens zwei Teilströme führende Teilzuführkanäle aufweist. In analoger Weise ist es bevorzugt, wenn alternativ oder zusätzlich wenigstens ein Abführkanal eine Zusammenführung zum Zusammenführen des Abführelektrolyts aus wenigstens zwei Teilströme führenden Teilabführkanälen aufweist, um das Abführelektrolyt über das Verteilermodul zu sammeln und gesammelt abführen zu können. Bei einer Umkehrung der Stromrichtung kann zwischen dem Laden und dem Entladen der Redox-Flow-Batterie gewechselt werden, ohne dass eine Umkehrung der Strömungsrichtung der Elektrolyte erforderlich wäre.

Dabei ist es besonders bevorzugt, wenn die wenigstens zwei Teilzuführkanäle des wenigstens einen Zuführkanals und/oder die wenigstens zwei Teilabführkanäle des wenigstens einen Abführkanals in einer Projektion auf einen Abschnitt der Schmalseite, insbesondere parallel zu Oberseite und/oder der Unterseite, wenigstens teilweise überlappend angeordnet sind. Dies erlaubt eine sehr flache Ausgestaltung des Verteilermoduls und damit eine entsprechende Platzersparnis. Mit anderen Worten können die Teilabführkanäle und/oder Teilzuführkanäle höher ausgebildet sein als die halbe Höhe des Verteilermoduls. Die Teilabführkanäle und/oder Teilzuführkanäle sind dafür seitlich geringfügig gegeneinander versetzt angeordnet.

Um die Wirtschaftlichkeit bei der Verschaltung großer und leistungsfähiger Redox-Flow-Batterien weiter verbessern zu können, ist es zweckmäßig, nicht nur die hydraulische Verschaltung der Teilzellstacks, sondern auch die elektrische Verschaltung der Teilzellstacks über das wenigstens eine Verteilermodul abzubilden. Es bietet sich daher insbesondere an, wenn wenigstens ein elektrischer Leiter, insbesondere wenigstens zwei elektrische Leiter, zum Leiten des elektrischen Stroms des Stacks, insbesondere von wenigstens einem Teilzellstack zu wenigstens einem anderen Teilzellstack, durch das Verteilermodul laufen. Der wenigstens eine elektrische Leiter kann dann insbesondere zum Verbinden zweier Endelektroden des Zellstacks vorgesehen sein. Insbesondere ist es dabei bevorzugt, wenn die Teilzellstacks elektrisch in Reihe miteinander über den wenigstens einen elektrischen Leiter im Verteilermodul verbunden sind.

Besonders zweckmäßig für die elektrische Verbindung der Teilzellstacks ist es dabei, wenn der Schmalseite, der Oberseite und/oder der Unterseite elektrische Anschlüsse des wenigstens einen Leiters, insbesondere in Form einer Steckverbindung, also etwa in Form eines Steckers und/oder einer Buchse, zugeordnet sind. Dann können die Teilzellstacks an denselben Seiten des Verteilermoduls jeweils sowohl hydraulisch als auch elektrisch angeschlossen werden. Der wenigstens eine Leiter kann auch aus dem Verteilermodul herausgeführt werden. Insbesondere kann der Leiter dabei als flächiger Leiter, beispielsweise als eine sogenannte Leiterfahne, ausgebildet und aus dem Verteilermodul herausgeführt sein.

Zur Steuerung und/oder Regelung des Zellstacks kann es dabei zweckmäßig sein, wenn dem wenigstens einen Leiter wenigstens eine Strommesseinrichtung zugeordnet ist. So lässt sich in bestimmten Leitern der durch den Zellstack bzw. die Teilzellstacks aufgenommene und/oder abgegebene Strom erfassen. Dies können wichtige Kriterien für die Steuerung und/oder Regelung der Redox-Flow-Batterie sein.

Alternativ oder zusätzlich kann zur Steuerung und/oder Regelung des Zellstacks im Verteilermodul wenigstens ein Messaufnehmer, insbesondere zusammen mit einem korrespondierenden Messumformer, zur Aufnahme eines Messwerts vorgesehen sein. Bedarfsweise kann der Messumformer auch außerhalb des Verteilermoduls angeordnet sein, und zwar insbesondere dann, wenn der Messumformer verhältnismäßig viel Platz beansprucht. Als Messwerte kommen für die Steuerung und/oder Regelung des Zellstacks insbesondere der pH-Wert, die Leitfähigkeit, das elektrochemische Potential, die Temperatur, die Dichte, der Druck und/oder der Volumenstrom wenigstens eines Zuführelektrolyts und/oder Abführelektrolyts in Frage. Ebenso kann der Messaufnehmer bzw. Messumformer die Reflexion, Transmission und/oder Absorption von Licht erfassen. Das Licht kann dabei eine bestimmte Wellenlänge oder Wellenlängenverteilung aufweisen. In vielen Fällen ändert sich mit dem Ladezustand die Farbe des Zuführelektrolyts und/oder Abführelektrolyts, so dass über die Reflexion, Transmission und/oder Absorption auf den Ladezustand geschlossen werden kann. Zur Erfassung der Reflexion, Transmission und/oder Absorption kommt dann bevorzugt wenigstens eine Strahlungsquelle zum Bestrahlen des Zuführelektrolyts und/oder Abführelektrolyts im Verteilermodul mit der gewünschten Strahlung zum Einsatz.

Um eine möglichst kompakte und umfassende Einheit zu schaffen, kann alternativ oder zusätzlich auch wenigstens eine Steuerungs- und/oder Regelungseinrichtung im Verteilermodul, vorzugsweise zur Steuerung und/oder Regelung des Zellstacks, vorgesehen sein. Dabei bietet es sich weiter an, wenn die Steuerungs- und/oder Regelungseinrichtung zur Steuerung und/oder Regelung wenigstens einer Pumpe für Zuführelektrolyt und/oder Abführelektrolyt ausgebildet ist, da sich über die wenigstens eine Pumpe bzw. über den wenigstens einen Volumenstrom der Zellstack in erheblichem Maße steuern und/oder regeln lässt. Dabei ist es besonders effektiv und platzsparend, wenn die Steuerungs- und/oder Regelungseinrichtung mit der wenigstens einen Strommesseinrichtung und/oder dem wenigstens einen Messaufnehmer, insbesondere zusammen mit dem wenigstens einen korrespondierenden Messumformer, verbunden ist. So kann der erfasste Strom und/oder der wenigstens eine andere Messwert zur Regelung und/oder Steuerung des Zellstacks in einfacher Weise herangezogen werden.

Bei einer ersten besonders bevorzugten Ausgestaltung des Zellstacks ist wenigstens ein Teilzellstack hydraulisch über die Oberseite des Verteilermoduls mit dem Verteilermodul verbunden. Dies ermöglicht eine platzsparende und modulare Verschaltung von Teilzellstacks über wenigstens ein Verteilermodul zu einem Zellstack. Dabei ist es aus demselben Grunde bevorzugt, wenn wenigstens ein Teilzellstack hydraulisch über die Schmalseite des Verteilermoduls mit dem Verteilermodul verbunden ist. Alternativ oder zusätzlich kann ebenfalls aus demselben Grunde vorgesehen sein, dass wenigstens ein Teilzellstack hydraulisch über die Unterseite des Verteilermoduls mit dem Verteilermodul verbunden ist. Dies trägt insgesamt dem Gedanken einer Modularität und der damit geschaffenen Flexibilität beim Aufbau eines Zellstacks Rechnung.

Wenn wenigstens zwei Verteilermodule über korrespondierende Aufnahmeanschlüsse und Abgabeanschlüsse der jeweils wenigstens zwei Zuführkanäle und/oder der jeweils wenigstens zwei Abführkanäle hydraulisch miteinander verbunden sind, kann der Zellstack einfach um weitere Teilzellstacks erweitert werden, ohne die Modularität dadurch zu beeinträchtigen. Dabei kann dann insbesondere jedes Verteilermodul hydraulisch mit wenigstens einem Teilzellstack, insbesondere wenigstens zwei Teilzellstacks, verbunden sein. So lassen sich einfach, platzsparend und kostengünstig größere und leistungsfähigere Zellstacks aufbauen.

Dabei bietet es sich hinsichtlich der Flexibilität und der Modularität weiter an, wenn wenigstens zwei Verteilermodule nach einem der Ansprüche 1 bis 10 ausgebildet sind. So lassen sich ganz allgemein die zuvor beschriebenen Vorteile der entsprechenden Verteilermodule in besonderem Maße nutzen. Dabei ist es zur Unterstützung der Modularität und zur Senkung der Kosten bevorzugt, wenn die Verteilermodule gleichartig, insbesondere identisch, ausgebildet sind. So lassen sich beispielsweise Gleichteile in effektiver Weise nutzen.

Besonders zweckmäßig für den Aufbau und den Betrieb des Zellstacks ist es dabei grundsätzlich, wenn die wenigstens zwei Teilzellstacks über das wenigstens eine Verteilermodul hydraulisch parallel und/oder elektrisch seriell miteinander verbunden sind.

Nachfolgend wird die Erfindung anhand einer lediglich Ausführungsbeispiele darstellenden Zeichnung näher beschrieben. In der Zeichnung zeigt
- Fig. 1: einen erfindungsgemäßen Zellstack einer Redox-Flow-Batterie in einer schematischen Seitenansicht,
- Fig. 2: ein erfindungsgemäßes Verteilermodul des Zellstacks aus Fig. 1 in einer Draufsicht auf einen Schnitt entlang einer parallel zur Oberseite des Verteilermoduls verlaufenden Schnittebene,
- Fig. 3: das Verteilermodul aus Fig. 2 in einer Ansicht von unten auf einen Schnitt entlang einer parallel zur Unterseite des Verteilermoduls verlaufenden Schnittebene,
- Fig. 4: das Verteilermodul aus Fig. 2 in einer Schnittansicht entlang der Schnittebene IV-IV aus Fig. 2,
- Fig. 5: das Verteilermodul aus Fig. 2 in einer Schnittansicht entlang der Schnittebene V-V aus Fig. 2,
- Fig. 6A-B: das Verteilermodul aus Fig. 2 in einer schematischen Seitenansicht,
- Fig. 7: das Verteilermodul aus Fig. 2 in einer schematischen Darufsicht und
- Fig. 8: einen alternativen erfindungsgemäßen Zellstack einer Redox-Flow-Batterie mit alternativen erfindungsgemäßen Verteilermodulen in einer schematischen Seitenansicht.

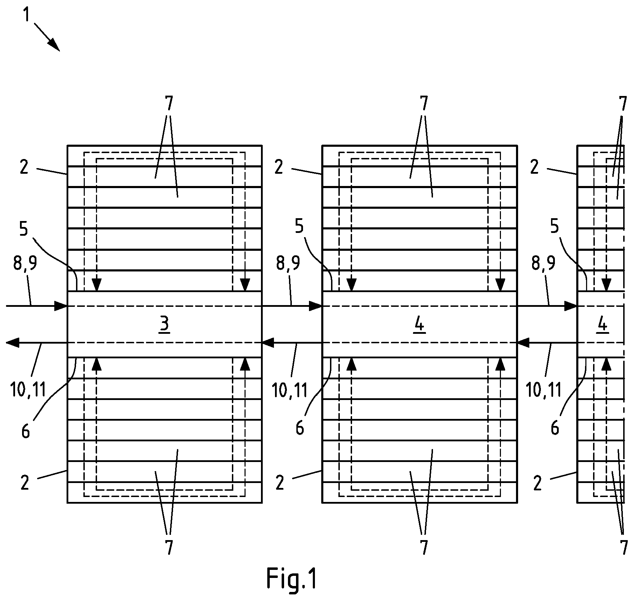

In der Fig. 1 ist ein Zellstack 1 einer Redox-Flow-Batterie mit einer Mehrzahl von Teilzellstacks 2 dargestellt. Jeder der Teilzellstacks 2 ist dabei mit einem Verteilermodul 3,4 verbunden, und zwar entweder mit einer Oberseite 5 oder mit einer Unterseite 6 des entsprechenden Verteilermoduls 3,4. Zudem sind die Verteilermodule 3,4 des Zellstacks 1 untereinander verbunden. Während in konventionellen Redox-Flow-Batterien die Zellstacks einen einzigen Stapel von Zellen aufweisen, weist der dargestellte und insoweit bevorzugte Zellstack 1 eine Reihe von Teilzellstacks 2 auf, die jeweils für sich einen separaten Stapel von Zellen 7 darstellen. Bei den Zellen 7 handelt es sich vorzugsweise um gleichartige Zellen 7, die nach konventioneller Weise jeweils durch zwei über eine Membran getrennte Halbzellen gebildet sein können. Jede Halbzelle grenzt dabei mit einem Zellinnenraum an die Membran, über die Ionen zwischen den Elektrolyten der Halbzellen ausgetauscht werden können. Der Zellinnenraum der Halbzellen grenzt zudem auf der von der Membran abgewandten Seite an eine Elektrode für den Transport der bei der Redoxreaktion zwischen den Elektrolyten ausgetauschter Elektronen. Die Halbzellen der Zellen 7 der Teilzellstacks 2 werden im Betrieb kontinuierlich mit unterschiedlichen Zuführelektrolyten 8 versorgt, die in den Zellen miteinander reagieren und anschließend als Abführelektrolyte 9 aus den Halbzellen abgeführt werden. Die Zuführelektrolyte 8,9 und die Abführelektrolyte 10,11 werden in vier separaten, nicht dargestellten Tanks der Redox-Flow-Batterien gesammelt. Jeweils zwei der Tanks und damit jeweils ein Zuführelektrolyt 8,9 und ein Abführelektrolyt 10,11 sind über die Zellinnenräume der Zellen 7 miteinander verbunden. Welches Elektrolyt der Paare von Elektrolyten das Zuführelektrolyt 8,9 und welches andere Elektrolyt das Abführelektrolyt 10,11 ist, hängt von der Strömungsrichtung der Elektrolyte durch die Zellen 7 ab. Dabei ist die Strömungsrichtung der Elektrolyte beim Laden der Redox-Flow-Batterie entgegengesetzt zur Strömungsrichtung der Elektrolyte, während die Redox-Flow-Batterie den zuvor gespeicherten Strom wieder an einen Verbraucher abgibt.

Um die Zuführelektrolyte 8,9 von den zugehörigen Tanks je nach der entsprechenden Strömungsrichtung bzw. je nach Betriebszustand auf die einzelnen Teilzellstacks 2 zu verteilen und die Abführelektrolyte 10,11 von den einzelnen Teilzellstacks 2 zu sammeln und gesammelt den entsprechenden Tanks zuzuführen, sind bei dem dargestellten Zellstack 1 die Verteilermodule 3,4 vorgesehen. Innerhalb des jeweiligen Teilzellstacks 2 werden die Elektrolyte vorzugsweise auf eine herkömmliche Art auf die Halbzellen verteilt bzw. von den Halbzellen kommend wieder gesammelt. Insbesondere sind dazu in den Ecken der Halbzellen, Zellen 7 und Teilzellstacks 2 Steigleitungen vorgesehen. Jede Steigleitung ist dabei mit einer Halbzelle pro Zelle 7 des Teilzellstacks 2 verbunden, und zwar vorzugsweise so, dass die Halbzellen parallel zueinander von den Elektrolyten durchströmt werden. Dies ist lediglich sehr schematisch durch entsprechende Pfeile dargestellt.

Die Verteilermodule 3,4 können der Einfachheit halber aus Kunststoff gefertigt sein, wobei die Kanäle der Verteilermodule 3,4 für die Elektrolyte beispielsweise mittels Spritzgießen und durch Herausfräsen von Materialen gebildet werden können. Bedarfsweise kann das Verteilermodul 3,4 mehrschichtig ausgebildet sein, um die Fertigung der Verteilermodule zu vereinfachen. Eine Kernschicht umfasst wenigstens im Wesentlichen die Kanäle zum Verteilen und zum Zusammenführen von Elektrolyten. Um die Kanäle der Kernschicht dicht zu verschließen, kann wenigstens eine Deckschicht vorgesehen sein, die vorzugsweise lediglich vier Öffnungen zum Durchströmen der Elektrolyte zum Teilzellstack 2 bzw. vom Teilzellstack 2 aufweist. Bei dem dargestellten und insoweit bevorzugten Zellstack 2 bietet es sich an, wenn die Kernschicht von der Oberseite 5 sowie von der Unterseite 6 offene Kanäle aufweist. Um die Kanäle gegeneinander abzudichten, können dann an gegenüberliegenden Seiten Deckschichten vorgesehen sein. Wenigstens eine Deckschicht des Verteilermoduls 3,4 kann auch durch eine angrenzende Zelle 7 bzw. Halbzelle bereitgestellt werden. Auf separate Deckschichten kann dann wenigstens teilweise verzichtet werden.

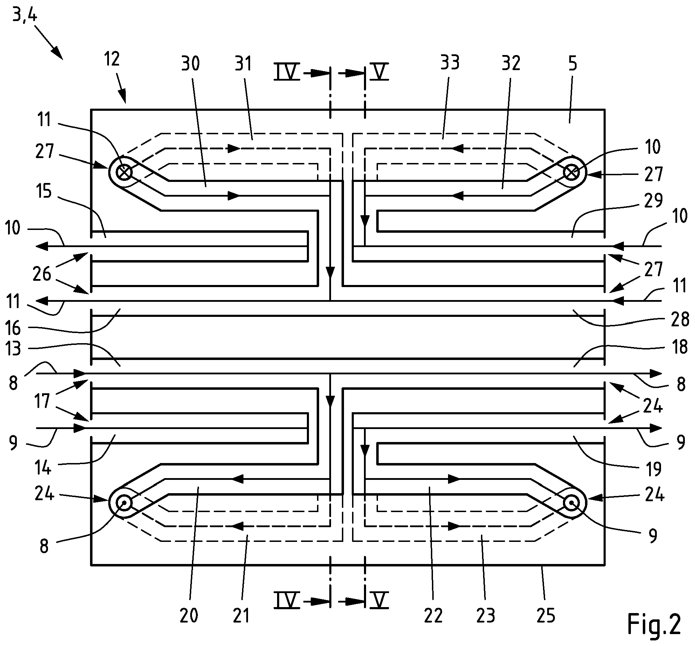

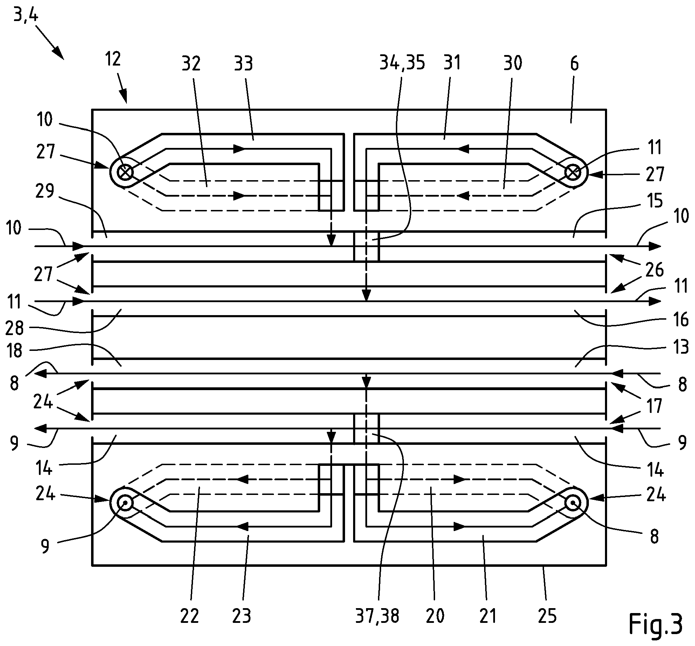

In der Fig. 2 ist ein Verteilermodul 3,4 in einer schematischen Schnittansicht von oben, bedarfsweise eine Kernschicht 12 des Verteilermoduls 3,4 in einer schematischen Draufsicht, dargestellt, in der insbesondere die Kanäle der Elektrolyte dargestellt sind. In der Fig. 3 ist dasselbe Verteilermodul 3,4 in einer schematischen Schnittansicht von unten, bedarfsweise eine Kernschicht 12 des Verteilermoduls 3,4 in einer schematischen Ansicht von unten, dargestellt. Das Verteilermodul 3,4 umfasst dabei zwei Zuführkanäle 13,14 für Zuführelektrolyte 8,9 und zwei Abführkanäle 15,16 für Abführelektrolyte 10,11. Bei Umkehrung der Strömungsrichtung werden die Zuführkanäle 13,14 zu Abführkanälen 15,16 und umgekehrt. Im Folgenden soll jedoch der besseren Verständlichkeit halber von einer bestimmten Strömungsrichtung ausgegangen werden.

Die Zuführkanäle 13,14 werden auf der linken Seite der Fig. 2 und der rechten Seite der Fig. 3 über Aufnahmeanschlüsse 17 mit dem Zuführelektrolyt 8,9 von den Zuführelektrolyttanks versorgt. Dabei gabeln sich die vorliegenden Zuführkanäle 13,14 zweimal an entsprechenden Gabelungen um das jeweilige Zuführelektrolyt 8,9 auf Teilzuführkanäle 18-23 aufzuteilen, was durch die Pfeile veranschaulicht worden ist. Die Zuführelektrolyte 8,9 werden daraufhin bei dem dargestellten Verteilermodul 3,4 über Abgabeanschlüsse 24 abgegeben, und zwar jeweils an der Oberseite 5, an der Unterseite 6 und an der zwischen der Oberseite 5 und der Unterseite 6 umlaufend vorgesehene Schmalseite 25 . Dabei werden die Zuführelektrolyte 8,9 über die Abgabeanschlüsse 24 an die sich an die Oberseite 5 und die Unterseite 6 des Verteilermoduls 3,4 anschließende Teilzellstacks 2 abgegeben. Über die Abgabeanschlüsse 24 an der Schmalseite 25 wird ein weiteres Verteilermodul 3,4 angeschlossen und mit Zuführelektrolyt 8,9 versorgt. Das Zuführelektrolyt 8,9 wird dabei in dem weiteren Verteilermodul 3,4 analog zu dem zuvor beschriebenen Verteilermodul 3,4 auf mehrere Teilzellstacks 2 verteilt.

Die Abführkanäle 15,16 der Abführelektrolyte 10,11 münden an der linken Seite der Fig. 2 und der rechten Seite der Fig. 3 in Abgabeanschlüsse 26, wobei die Abführelektrolyte 10,11 jeweils über Aufnahmeanschlüsse 27 an der Oberseite 5, der Unterseite 6 und der zwischen der Oberseite 5 und der Unterseite 6 umlaufenden Schmalseite 25 aufgenommen werden. Über zwei Zusammenführungen im Verteilermodul 3,4 werden die Abführelektrolyte 10,11 aus den Teilabführkanälen 28-33 in den Abführkanal 15,16 geleitet und über den Abgabeanschluss 26 gesammelt ab- und den Abgabeelektrolyttanks zugeführt. Während über die Aufnahmeanschlüsse 27 an der Oberseite 5 und an der Unterseite 6 Abführelektrolyte 10,11 aus den an der Oberseite 5 und an der Unterseite 6 angeschlossenen Teilzellstacks 2 aufgenommen werden, werden über die Aufnahmeanschlüsse 27 an der Schmalseite 25 von dem weiteren Verteilermodul 3,4 gesammelte Abführelektrolyte 10,11 aufgenommen.

Bei dem dargestellten und insoweit bevorzugten Verteilermodul 3,4 sind die Aufnahmeanschlüsse 17,27 und die Abgabeanschlüsse 24,26 lediglich als Öffnungen ausgebildet. Andere Anschlüsse, insbesondere Steckanschlüsse zum Verbinden mit korrespondierenden Anschlüssen der Teilzellstacks 2 und/oder weiterer Verteilermodule 3,4 durch Zusammenstecken derselben, wären aber ebenfalls denkbar. Um zeichnerisch die Strömungsrichtung der Elektrolyte parallel zur Blickrichtung unterscheiden zu können, werden übliche Symbole verwendet. Ein Kreis mit einem zentralen Punkt zeigt einen Pfeil, der auf den Betrachter zu gerichtet ist, während ein Kreis mit einem Kreuz einen Pfeil repräsentiert, der von dem Betrachter wegweist.

Um die Zuführelektrolyte 8,9 über das Verteilermodul 3,4 zu verteilen und gleichzeitig die Abführelektrolyte 10,11 über das Verteilermodul 3,4 zu sammeln, kreuzen sich die Kanäle des Verteilermoduls 3,4 teilweise. Hierzu können sogenannte Brücken 34 bereitgestellt werden, über die ein Elektrolyt strömt, während ein anderer Elektrolyt vorzugsweise senkrecht dazu unter der Brücke 34 hindurchströmt. Bei dem dargestellten und insoweit bevorzugten Verteilermodul 3,4 sind zwei solcher Kreuzungen 35 vorgesehen, wobei sich an einer Kreuzung 35 die Abführelektrolyte 10,11 und bei der anderen Kreuzung die Zuführelektrolyte 8,9 kreuzen.

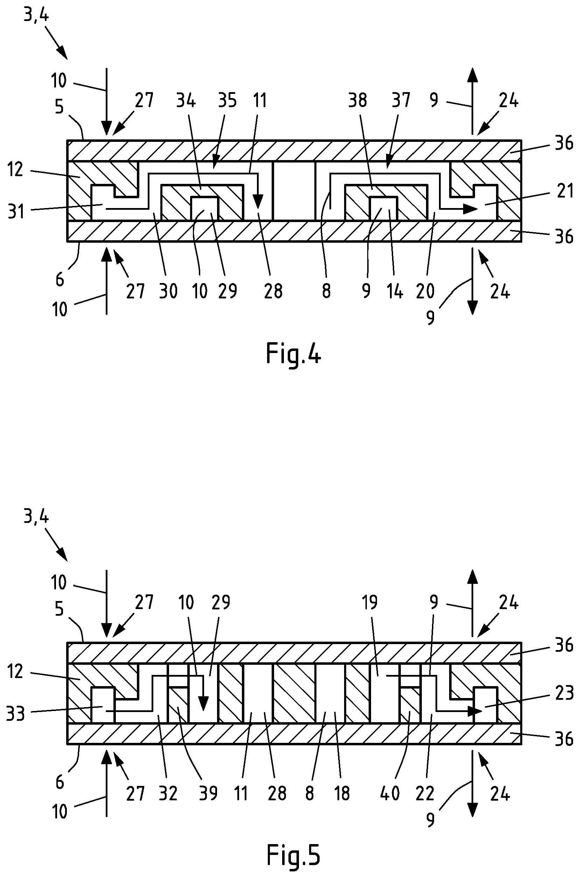

Dem besseren Verständnis halber wird das Verteilermodul in der Fig. 4 in einem Schnitt entlang der Schnittebene IV-IV der Fig. 2 dargestellt. Dabei ist das dargestellte Verteilermodul 3,4 aus der Kernschicht 12 und zwei die Oberseite 5 und die Unterseite 6 des Verteilermoduls 3,4 bildende Deckschichten 36 gebildet, die grundsätzlich auch durch die sich an der Oberseite 5 und der Unterseite 6 des Verteilermoduls 3,4 anschließenden Teilzellstacks 2 gebildet werden könnten. Der von den Teilzellstacks 2 zuströmende und über die Aufnahmeanschlüsse 27 an der Oberseite 5 und der Unterseite 6 aufgenommene Abführelektrolyt 10,11 wird in den Teilabführkanälen 30-33 gesammelt. Eine Abführelektrolyt 11 wird über eine Brücke 34 an einer Kreuzung 35 über das andere Abführelektrolyt 10 hinweg geleitet, das unter der Brücke 34 hindurchströmt. Die Abführelektrolyte 10,11 bleiben so separat und können separat in separaten Abführelektrolyttanks gespeichert werden. Nach dem Überströmen der Brücke 34 im Bereich der Kreuzung 35 mit dem anderen Abführelektrolyt 10 wird der Abführelektrolyt 11 mit weiterem Abführelektrolyt 11, der von dem angeschlossenen Verteilermodul 4 über die Schmalseite 25 zugeführt wird, zusammengeführt, um gemeinsam über den Abgabeanschluss 26 abgegeben zu werden.

Analog zu dem entsprechenden Abführelektrolyt 10,11 wird der Zuführelektrolyt 8,9 durch das Verteilermodul 3,4 geleitet, jedoch in umgekehrter Richtung. Der Zuführelektrolyt 8,9 wird zunächst an der Schmalseite 25 über den Aufnahmeanschluss 17 aufgenommen und sodann einerseits durch das Verteilermodul 3,4 zum gegenüberliegenden Abschnitt der Schmalseite 25 geleitet, wo der Zuführelektrolyt 8,9 über den Abgabeanschluss 24 in Richtung des angeschlossenen weiteren Verteilermoduls 4 austritt. Ein Zuführelektrolyt 8 wird abgezweigt und an einer Kreuzung 37 über eine Brücke 38 geleitet, unter der der andere Zuführelektrolyt 9 hindurchströmt. Nach dem Passieren der Brücke 38 teilt sich der Zuführelektrolyt 8 erneut auf, und zwar in einen Teilstrom zum sich an der Oberseite 5 anschließenden Teilzellstack 2 und einen sich an der Unterseite 6 anschließenden Teilzellstack 2. Beide Teilströme treten über die an der Oberseite 5 und der Unterseite 6 zu diesem Zweck vorgesehene Abgabeanschlüsse 24 aus dem Verteilermodul 3,4 aus. Ferner überdecken sich jeweils zwei der Abgabeanschlüsse 24 in der dargestellten Ansicht an der Oberseite 5 und an der Unterseite 6. Anders ausgedrückt sind jeder der beiden Ecken des Verteilermoduls 3,4 zwei Abgabeanschlüsse 24 zugeordnet, und zwar jeweils einander überdeckend, einmal an der Oberseite 5 und einmal an der Unterseite 5.

Dem besseren Verständnis halber wird das Verteilermodul zudem in der Fig. 5 in einem Schnitt entlang der Schnittebene V-V der Fig. 2 dargestellt. Der im Zusammenhang mit der Fig. 4 nur kurz angesprochene, andere Abführelektrolyt 10 wird ebenfalls über Aufnahmeanschlüsse 27 an der Oberseite 5 und der Unterseite 6 des Verteilermoduls 3,4 von den sich an die Oberseite 5 und die Unterseite 6 anschließenden Teilzellstacks 2 zugeführt, und zwar über separate Teilabführkanäle 32,33, die über eine Zusammenführung miteinander verbunden sind. Dabei überdecken sich jeweils zwei der Aufnahmeanschlüsse 27 in der dargestellten Ansicht an der Oberseite 5 und an der Unterseite 6. Anders ausgedrückt sind jeder der beiden Ecken des Verteilermoduls 3,4 zwei Aufnahmeanschlüsse 27 zugeordnet, und zwar jeweils einander überdeckend, einmal an der Oberseite 5 und einmal an der Unterseite 6. Der so zusammengeführte Teil des Abführelektrolyts 10 wird über eine Art Mauer 39 geleitet und gelangt so zusammen mit dem von dem weiteren Verteilermodul 4 über die Schmalseite 25 und den Teilabführkanal 29 zugeführten Abführelektrolyt 10 in den Abführkanal 15. Der so gesammelte Abführelektrolyt 10 wird über die Schmalseite 25 aus dem Abgabeanschluss 26 an den zugeordneten Abführelektrolyttank abgegeben.

Analog zu dem entsprechenden Abführelektrolyt 10 wird der eine andere, im Zusammenhang mit der Fig. 4 nur kur angesprochene Zuführelektrolyt 9 durch das Verteilermodul 3,4 geleitet, jedoch in umgekehrter Richtung. Der Zuführelektrolyt 9 wird von dem Zuführelektrolyttank über einen Aufnahmeanschluss 17 an der Schmalseite 25 zugeführt und wird teilweise über einen Teilzuführkanal 19 zu einem Abgabeanschluss 24 an dem gegenüberliegenden Abschnitt der Schmalseite 25 geleitet von wo der Zuführelektrolyt 9 zur weiteren Verteilung in ein weiteres Verteilermodul 4 gelangt. Der übrige Teil des Zuführelektrolyts 9 wird über eine Art Mauer 40 geleitet und sodann über eine Gabelung aufgeteilt in zwei Teilzuführkanäle 22,23. Die entsprechenden Teile des Zuführelektrolyts 9 werden anschließend über Abgabeanschlüsse 24 an der Oberseite 5 und an der Unterseite 6 des Verteilermoduls 3,4 an sich an die Oberseite 5 und sich an die Unterseite 6 des Verteilermoduls 3,4 anschließende Teilzellstacks 2 abgegeben.

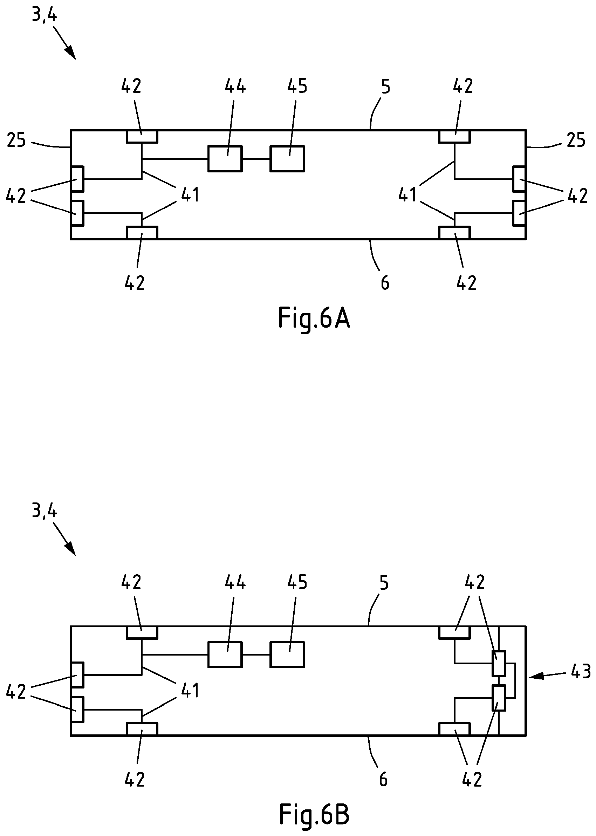

Weiter bevorzugt ist es grundsätzlich, wenn die Zellen 7 des Zellstacks 1 bzw. die Teilzellstacks 2 hydraulisch parallel geschaltet aber elektrisch in Reihe geschaltet sind. Dabei ist es besonders zweckmäßig, wenn die elektrische Verschaltung der Teilzellstacks 2 wie die Verschaltung der Elektrolyte durch das Verteilermodul 3,4 erfolgt. In der Fig. 6A sind die elektrischen Leiter 41 innerhalb des Verteilermoduls 3,4 schematisch dargestellt, um die serielle elektrische Verschaltung der Zellen 7 des Zellstacks 1 gemäß Fig. 1 über entsprechende Verteilermodule 3,4 bereitstellen zu können. Es sind dabei an der Oberseite 5, an der Unterseite 6 und an gegenüberliegenden Abschnitten der Schmalseite 25 jeweils zwei elektrische Anschlüsse 42 vorgesehen, von denen jeweils zwei über separate elektrische Leiter 41 miteinander verbunden sind. Wenn die elektrischen Leiter 41 in den Kunststoff oder ein anderes elektrisch isolierendes Material des Verteilermoduls 3,4 eingelassen sind, wird dadurch auch die elektrische Isolation der Leiter 41 untereinander sichergestellt. Die einzelnen Anschlüsse 42 können jeweils als Stecker oder Buchse ausgebildet sein, um die Teilzellstacks 2 oder weitere Verteilermodule 4 einfach über elektrische Steckverbindungen anschließen zu können. Wenn an einem Abschnitt der Schmalseite 25 keine elektrische Anbindung etwa eines Teilzellstacks 2 oder weiteren Verteilermoduls 4 gewünscht ist, kann zum Schließen des Stromkreises eine Brücke 43 eingesetzt werden, welche die beiden dort vorgesehenen elektrischen Anschlüsse 42 leitend miteinander verbindet. Dies ist exemplarisch in der Fig. 6B dargestellt. Selbiges ist bedarfsweise auch an einer Oberseite 5 oder einer Unterseite 6 des Verteilermoduls 3,4 möglich, wenn dort beispielsweise kein Teilzellstack 2 angeschlossen werden soll.

Des Weiteren ist im Verteilermodul 3,4 eine Sensoreinrichtung 44 zur Messung des elektrischen Stroms und/oder zur Messung der elektrischen Spannung vorgesehen, die bedarfsweise sowohl den Messaufnehmer als auch den Messumformer umfassen kann. Im Übrigen ist in dem dargestellten Verteilermodul 3,4 noch eine Steuerungs- und/oder Regelungseinrichtung 45 zur Steuerung und/oder Regelung des Zellstacks 1 integriert, die mit der Sensoreinrichtung 44 zum Erfassen des elektrischen Stroms und/oder zur Messung der elektrischen Spannung verbunden sein kann, um die Steuerung und/oder Regelung des Zellstacks 1 vom entsprechenden Strom und/oder der entsprechenden Spannung abhängig gestalten zu können.

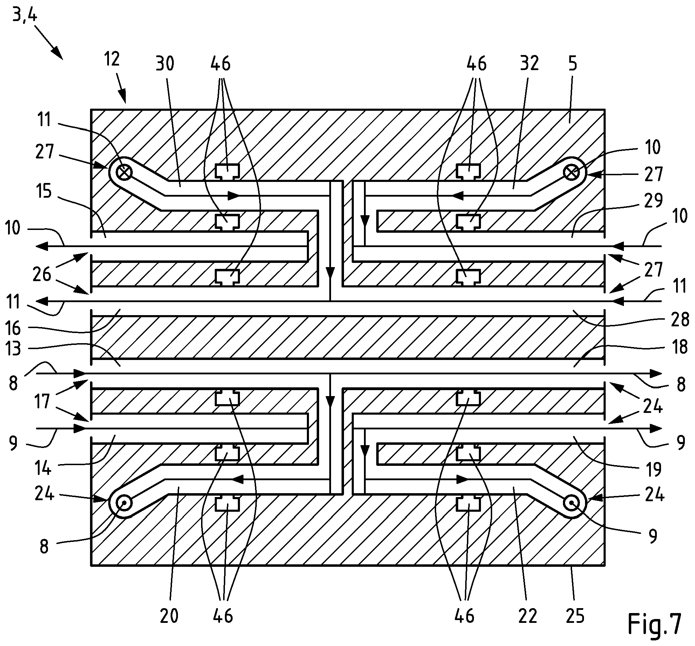

In der Fig. 7 ist ein Verteilermodul 3,4 dargestellt, das in hydraulischer Sicht dem Verteilermodul 3,4 der Fig. 2 entspricht. Es sind jedoch zudem im Verteilermodul 3,4 Sensoreinrichtungen 46 vorgesehen, die jeweils wenigstens einen Messaufnehmer und bedarfsweise auch wenigstens einen Messumformer aufweisen können. Die Sensoreinrichtungen 46 sind so im Verteilermodul 3,4 angeordnet, dass jedem Teilzuführkanal 18-23 und den Zuführkanälen 13,14 ebenso wie den Teilabführkanälen 28,33 und dem Abführkanälen 15,16 jeweils eine separate Sensoreinrichtung 46 zugeordnet ist. Demensprechend kann in jedem der genannten Kanäle ein Parameter des entsprechenden Elektrolyts gemessen werden. Es können bedarfsweise aber auch weniger oder mehr Sensoreinrichtungen 46 vorgesehen sein, je nachdem welche Parameter im Einzelfall erfasst werden sollen. Ganz grundsätzlich bietet es sich dabei an, wenn die einzelnen Sensoreinrichtungen 46 mit der Steuerungs- und/oder Regelungseinrichtung 45 zur Steuerung und/oder Regelung des Zellstacks 1 verbunden sind. Als Messaufnehmer der Sensoreinrichtungen 46 kommen beispielsweise solche zur Aufnahme des pH-Werts, der Leitfähigkeit, der Temperatur, der Dichte, des Drucks und/oder des Volumenstroms in Frage. Außerdem kann die Steuerungs- und/oder Regelungseinrichtung 45 zur Steuerung und/oder Regelung wenigstens einer Pumpe für den Zuführelektrolyt 8,9 und/oder den Abführelektrolyt 10,11 vorgesehen sein.

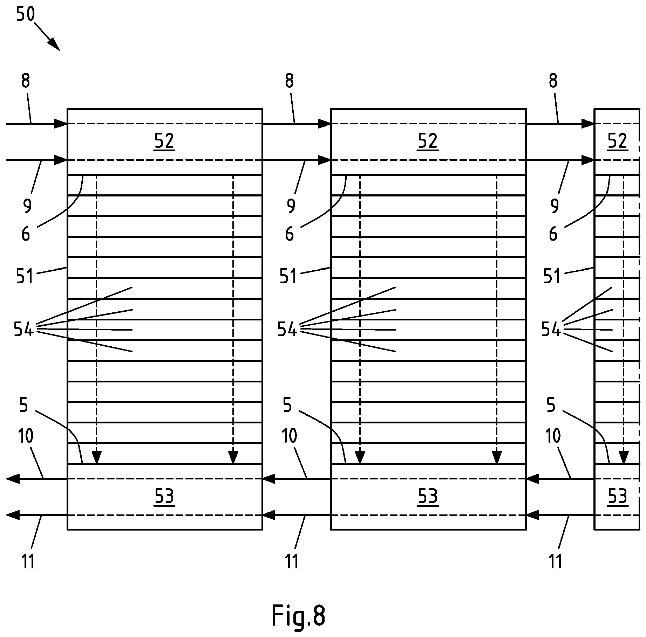

In der Fig. 8 ist ein Zellstack 50 einer Redox-Flow-Batterie mit einer Mehrzahl von Teilzellstacks 51 dargestellt. Jeder der Teilzellstacks 51 ist dabei mit einem Verteilermodul 52,53 verbunden, und zwar entweder mit einer Oberseite 5 oder mit einer Unterseite 6 des entsprechenden Verteilermoduls 52,53. Zudem sind die Verteilermodule 52,53 des Zellstacks 50 teilweise untereinander verbunden. Bei den Zellen 54 handelt es sich vorzugsweise um gleichartige Zellen 54, die nach konventioneller und zuvor bereits grundsätzlich beschriebenen Weise aufgebaut sind. Anders als die in der Fig. 1 dargestellten Verteilermodule 3,4 weisen die Verteilermodule 52,53 entweder lediglich zwei Zuführkanäle oder lediglich zwei Verteilerkanäle auf, die jeweils aber vorzugsweise wie zuvor beschrieben ausgebildet sein können. Es werden also über Verteilermodule 52, insbesondere über deren Zuführkanäle, die Zuführelektrolyte 8,9 zugeführt und die Abführelektrolyte 10,11 anschließend über andere Verteilermodule 53, insbesondere über deren Abführkanäle, abgeführt. Während bei dem Zellstack 1 der Fig. 1 die Zuführelektrolyte 8,9 über die Verteilermodule 3,4 zugeführt und die Abführelektrolyte 10,11 gleichzeitig über jeweils dieselben Verteilermodule 3,4 abgeführt werden, erfolgt bei dem Zellstack 50 der Fig. 8 das Zuführen der Zuführelektrolyte 8,9 über bestimmte Verteilermodule 52 und das Abführen der Abführelektrolyte 10,11 über andere Verteilermodule 53. Ein Zellstack weist dann also wenigstens zwei unterschiedliche Verteilermodule 52,53 auf, während bei dem Zellstack 1 der Fig. 1 ein Verteilermodul 3,4 ausreicht. Die Verteilermodule 52,53 gemäß Fig. 8 können dabei aufgebaut sein wie die Verteilermodule 3,4, und zwar insbesondere mit dem Unterschied, dass pro Verteilermodul 52,53 lediglich zwei Zuführkanäle 13,14 oder zwei Abführkanäle 15,16 vorgesehen sind. Diese Zuführkanäle 13,14 und/oder Abführkanäle 15,16 können dabei bedarfsweise jeweils so ausgebildet sein, wie bei dem in der Fig. 2 dargestellten Verteilermodul 3,4. Die Verwendung von wenigstens zwei unterschiedlichen Verteilermodulen 52,53 pro Zellstack 50 kann aber auch dazu genutzt werden, dass auf Kreuzungen 35,37, wie sie bei dem Verteilermodul 3,4 der Fig. 2 vorgesehen sind, verzichtet werden kann. Es müssen nämlich anders als bei den Verteilermodulen 3,4 gemäß Fig. 2 nur jeweils zwei Zuführkanäle 13,14 oder Abführkanäle 15,16 vorgesehen und untergebracht sein. Dies kann zu einer wesentlichen Vereinfachung der einzelnen Verteilermodule 52,53 als solche führen.

### Bezugszeichenliste

- 1: Zellstack
- 2: Teilzellstack
- 3,4: Verteilermodul
- 5: Oberseite
- 6: Unterseite
- 7: Zelle
- 8,9: Zuführelektrolyt
- 10, 11: Abführelektrolyt
- 12: Kernschicht
- 13,14: Zuführkanal
- 15,16: Abführkanal
- 17: Aufnahmeanschluss
- 18-23: Teilzuführkanäle
- 24: Abgabeanschluss
- 25: Schmalseite
- 26: Abgabeanschluss
- 27: Aufnahmeanschluss
- 28-33: Teilabführkanäle
- 34: Brücke
- 35: Kreuzung
- 36: Dechschicht
- 37: Kreuzung
- 38: Brücke
- 39,40: Mauer
- 41: Leiter
- 42: Anschluss
- 43: Brücke
- 44: Sensoreinrichtung
- 45: Steuerungs- und/oder Regelungseinrichtung
- 46: Sensoreinrichtung
- 50: Zellstack
- 51: Teilzellstack

## Patentansprüche

1. Verteilermodul (3,4) zum Verbinden von Zellen (7) eines Zellstacks (1) einer Redox-Flow-Batterie, mit einer Oberseite (5), einer Unterseite (6) und einer zwischen der Oberseite (5) und der Unterseite (6) um das Verteilermodul (3,4) umlaufenden Schmalseite (25) und mit zwei Zuführkanälen (13,14) zum Zuführen zweier unterschiedlicher Zuführelektrolyte (8,9) zu den Zellen (7) des Zellstacks (1) und/oder mit zwei Abführkanälen (15,16) zum Abführen zweier separater Abführelektrolyte (10,11) aus den Zellen (7) des Zellstacks (1), wobei die Zuführkanäle (13,14) und/oder die Abführkanäle (15,16) untereinander jeweils unverbunden sind,
**dadurch gekennzeichnet, dass**
die Zuführkanäle (13,14) jeweils wenigstens einen Aufnahmeanschluss (17) zum Aufnehmen von Zuführelektrolyt (8,9) und wenigstens zwei Abgabeanschlüsse (24) zum Abgeben von Zuführelektrolyt (8,9) an wenigstens zwei Teilzellstacks (2) miteinander verbindend und/oder die Abführkanäle (15,16) jeweils wenigstens zwei Aufnahmeanschlüsse (27) zum Aufnehmen von Abführelektrolyt (10,11) von den wenigstens zwei Teilzellstacks (2) und wenigstens einen Abgabeanschluss (26) zum Abgeben von Abführelektrolyt (10,11) miteinander verbindend ausgebildet sind, dass jeweils ein Aufnahmeanschluss (17) der Zuführkanäle (13,14) und/oder jeweils ein Abgabeanschluss (26) der Abführkanäle (15,16) an der Schmalseite (25) vorgesehen sind und dass jeweils wenigstens ein Abgabeanschluss (24) der Zuführkanäle (13,14) und/oder jeweils wenigstens ein Aufnahmeanschluss (27) der Abführkanäle (15,16) an der Oberseite (5) vorgesehen ist.

2. Verteilermodul nach Anspruch 1,
**dadurch gekennzeichnet, dass**
jeweils wenigstens ein Abgabeanschluss (24) der Zuführkanäle (13,14) und/oder jeweils wenigstens ein Aufnahmeanschluss (27) der Abführkanäle (15,16) an der Unterseite (6) vorgesehen sind.

3. Verteilermodul nach Anspruch 1 oder 2,
**dadurch gekennzeichnet, dass**
jeweils wenigstens ein Abgabeanschluss (24) der Zuführkanäle (13,14) und/oder jeweils wenigstens ein Aufnahmeanschluss (27) der Abführkanäle (15,16) an der Schmalseite (25) vorgesehen sind und dass, vorzugsweise, jeweils der wenigstens eine Abgabeanschluss (24) und der wenigstens eine Aufnahmeanschluss (17) der Zuführkanäle (13,14) und/oder jeweils der wenigstens eine Aufnahmeanschluss (27) und der wenigstens eine Abgabeanschluss (26) der Abführkanäle (15,16) an gegenüberliegenden Abschnitten der Schmalseiten (25) vorgesehen sind.

4. Verteilermodul nach einem der Ansprüche 1 bis 3,
**dadurch gekennzeichnet, dass**
in einer Projektion auf die Oberseite (5) oder die Unterseite (6) wenigstens eine Kreuzung (35,37) zwischen jeweils zwei der Zuführkanäle (13,14) und/oder der Abführkanäle (15,16) vorgesehen ist und dass, vorzugsweise, wenigstens zwei Kreuzungen (35,37) zwischen jeweils zwei der Zuführkanäle (13,14) und/oder Abführkanäle (15,16), insbesondere jeweils anderer Zuführkanäle (13014) und/oder Abführkanäle (15,16) vorgesehen sind.

5. Verteilermodul nach einem der Ansprüche 1 bis 4,
**dadurch gekennzeichnet, dass**
in einer Projektion auf die Oberseite (5) oder die Unterseite (6) wenigstens ein Paar an der Oberseite (5) und an der Unterseite (6) vorgesehener Aufnahmeanschlüsse (27) wenigstens eines Abführkanals (15,16) wenigstens im Wesentlichen einander überdeckend angeordnet ist und/oder dass in einer Projektion auf die Oberseite (5) oder die Unterseite (6) wenigstens ein Paar an der Oberseite (5) und an der Unterseite (6) vorgesehener Abgabeanschlüsse (24) wenigstens eines Zuführkanals (13,14) wenigstens im Wesentlichen einander überdeckend angeordnet ist.

6. Verteilermodul nach einem der Ansprüche 1 bis 5,
**dadurch gekennzeichnet, dass**
in einer Projektion auf die Oberseite (5) oder die Unterseite (6) wenigstens ein Aufnahmeanschluss (27) wenigstens eines Abführkanals (15,16) und/oder wenigstens ein Abgabeanschluss (24) wenigstens eines Zuführkanals (13,14) einer Ecke des Verteilermoduls (3,4) zugeordnet ist.

7. Verteilermodul nach einem der Ansprüche 1 bis 6,
**dadurch gekennzeichnet, dass** wenigstens ein Zuführkanal (13,14) eine Gabelung zur Aufteilung des Zuführelektrolyts (8,9) in wenigstens zwei Teilströme führende Teilzuführkanäle (18-23) und/oder wenigstens ein Abführkanal (15,16) eine Zusammenführung zum Zusammenführen des Abführelektrolyts (10,11) aus wenigstens zwei Teilströmen führenden Teilabführkanälen (28-33) vorgesehen ist und dass, vorzugsweise, die wenigstens zwei Teilzuführkanäle (18-23) des wenigstens einen Zuführkanals (13,14) und/oder die wenigstens zwei Teilabführkanäle (28-33) des wenigstens einen Abführkanals (15,16) in einer Projektion auf einen Abschnitt der Schmalseite (25), insbesondere parallel zur Oberseite (5) und/oder der Unterseite (6), wenigstens teilweise überlappend angeordnet sind.

8. Verteilermodul nach einem der Ansprüche 1 bis 7,
**dadurch gekennzeichnet, dass** wenigstens ein elektrischer Leiter (41), insbesondere wenigstens zwei elektrische Leiter (41), zum Leiten des elektrischen Stroms des Zellstacks (1), insbesondere von wenigstens einem Teilzellstack (2) zu wenigstens einem anderen Teilzellstack (2), durch das Verteilermodul (3,4), insbesondere zum Verbinden zweier Endelektroden des Zellstacks (1), vorgesehen ist und dass an der Schmalseite (25), der Oberseite (5) und/oder der Unterseite (6) elektrische Anschlüsse (42), insbesondere einer Steckverbindung, des wenigstens einen Leiters (41) vorgesehen sind und dass, vorzugsweise, dem wenigstens einen Leiter (41) wenigstens eine Strommesseinrichtung (44) zugeordnet ist.

9. Verteilermodul nach einem der Ansprüche 1 bis 8,
**dadurch gekennzeichnet, dass**
in das wenigstens ein Messaufnehmer, insbesondere zusammen mit einem korrespondierenden Messumformer, zur Aufnahme eines Messwerts, insbesondere pH-Wert, Leitfähigkeit, elektrochemisches Potential, Temperatur, Dichte, Druck und/oder Volumenstrom, wenigstens eines Zuführelektrolyts und/oder Abführelektrolyts im Verteilermodul (3,4), insbesondere in einer Sensoreinrichtung (46), und/oder zur Aufnahme eines Messwerts, betreffen die Reflexion, Transmission und/oder Absorption von Licht durch das Zuführelektrolyt und/oder Abführelektrolyt im Verteilermodul (3,4), insbesondere in einer Sensoreinrichtung (46), vorgesehen ist.

10. Verteilermodul nach einem der Ansprüche 1 bis 9,
**dadurch gekennzeichnet, dass** wenigstens eine Steuerungs- und/oder Regelungseinrichtung (45) im Verteilermodul (3,4), vorzugsweise zur Steuerung und/oder Regelung des Zellstacks (1), insbesondere zur Steuerung und/oder Regelung wenigstens einer Pumpe für Zuführelektrolyt (8,9) und/oder Abführelektrolyt (10,11) vorgesehen ist und dass, vorzugsweise die Steuerungs- und/oder Regelungseinrichtung (45) mit der wenigstens einen Strommesseinrichtung (44) und/oder dem wenigstens einen Messaufnehmer, insbesondere zusammen mit dem wenigstens einen korrespondierenden Messumformer und/oder wenigstens einer Sensoreinrichtung (46) verbunden ist.

11. Zellstack (1) einer Redox-Flow-Batterie mit wenigstens einem Verteilermodul (3,4) umfassend zwei Zuführkanäle (13,14) zum Zuführen zweier unterschiedlicher Zuführelektrolyte (8,9) zu den Zellen (7) des Zellstacks (1) und/oder zwei Abführkanäle (15,16) zum Abführen zweier separater Abführelektrolyte (10,11) aus den Zellen (7) des Zellstacks (1), **dadurch gekennzeichnet, dass** wenigstens zwei Teilzellstacks (2) über wenigstens ein Verteilermodul (3,4) nach einem der Ansprüche 1 bis 10 hydraulisch miteinander verbunden sind.

12. Zellstack nach Anspruch 11,
**dadurch gekennzeichnet, dass** wenigstens ein Teilzellstack (2) hydraulisch über die Oberseite (5) des Verteilermoduls (3,4) mit dem Verteilermodul (3,4) verbunden ist und dass wenigstens ein Teilzellstack (2) hydraulisch über die Schmalseite (25) und/oder die Unterseite (6) des Verteilermoduls (3,4) mit dem Verteilermodul (3,4) verbunden ist.

13. Zellstack nach Anspruch 11 oder 12,
**dadurch gekennzeichnet, dass** wenigstens zwei Verteilermodule (3,4) über korrespondierende Aufnahmeanschlüsse (27) und Abgabeanschlüsse (24) der jeweils wenigstens zwei Zuführkanäle (13,14) und/oder der jeweils wenigstens zwei Abführkanäle (15,16) hydraulisch miteinander verbunden sind und dass jedes Verteilermodul (3,4) hydraulisch mit wenigstens einem Teilzellstack (2), insbesondere wenigstens zwei Teilzellstacks (2), verbunden ist.

14. Zellstack nach Anspruch 13,
**dadurch gekennzeichnet, dass**
die wenigstens zwei Verteilermodule (3,4) nach einem der Ansprüche 1 bis 10 ausgebildet sind und dass, vorzugsweise, die Verteilermodule (3,4) gleichartig, insbesondere identisch, ausgebildet sind.

15. Zellstack nach einem der Ansprüche 11 bis 14,
**dadurch gekennzeichnet, dass**
die wenigstens zwei Teilzellstacks (2) über das wenigstens eine Verteilermodul (3,4) hydraulisch parallel und/oder elektrisch seriell miteinander verbunden sind.

## Claims

1. Distributor module (3, 4) for connecting cells (7) of a cell stack (1) of a redox flow battery, with a top side (5), a bottom side (6) and a narrow side (25) being arranged circumferentially around the distributor module (3, 4) between the top side (5) and the bottom side (6), and with two supply channels (13,14) for supplying two different supply electrolytes (8, 9) to the cells (7) of the cell stack (1) and/or with two discharge channels (15, 16) for discharging two separate discharge electrolytes (10, 11) from the cells (7) of the cell stack (1), wherein the supply channels (13, 14) and/or the discharge channels (15, 16) are respectively unconnected to one another,
**characterized in that**
the supply channels (13, 14) are respectively configured to connect at least one receiving connection (17) for receiving supply electrolyte (8, 9) and at least two discharge connections (24) for discharging supply electrolyte (8, 9) to at least two partial cell stacks (2) and/or the discharge channels (15,16) are respectively configured to connect at least two receiving connections (27) for receiving discharge electrolyte (10, 11) from the at least two partial cell stacks (2) and at least one discharge connection (26) for discharging discharge electrolyte (10,11) are configured connectingly to one another, that respectively one receiving connection (17) of the supply channels (13, 14) and/or respectively one discharge connection (26) of the discharge channels (15, 16) is provided on the narrow side (25), and that respectively at least one discharge connection (24) of the supply channels (13, 14) and/or respectively at least one receiving connection (27) of the discharge channels (15, 16) is provided on the top side (5).

2. Distributor module according to claim 1,
**characterized in that**
respectively at least one discharge connection (24) of the supply channels (13, 14) and/or respectively at least one receiving connection (27) of the discharge channels (15, 16) are provided on the bottom side (6).

3. Distributor module according to claim 1 or 2,
**characterized in that**
respectively at least one discharge connection (24) of the supply channels (13, 14) and/or respectively at least one receiving connection (27) of the discharge channels (15, 16) are provided on the narrow side (25) and that, preferably, respectively the at least one discharge connection (24) and the at least one receiving connection (17) of the supply channels (13, 14) and/or respectively the at least one receiving connection (27) and the at least one discharge connection (26) of the discharge channels (15, 16) are provided on opposite sections of the narrow sides (25).

4. Distributor module according to one of claims 1 to 3,
**characterized in that**
in a projection onto the upper side (5) or the bottom side (6), at least one intersection (35, 37) is provided between respectively two of the supply channels (13, 14) and/or the discharge channels (15, 16) and that, preferably, at least two intersections (35, 37) are provided between respectively two of the supply channels (13, 14) and/or discharge channels (15, 16), in particular respectively of other supply channels (13014) and/or discharge channels (15, 16).

5. Distributor module according to one of claims 1 to 4,
**characterized in that**
in a projection onto the upper side (5) or the bottom side (6), at least one pair of receiving connections (27) provided on the upper side (5) and on the bottom side (6) of at least one discharge channel (15,16) is arranged at least substantially overlapping one another and/or that in a projection onto the upper side (5) or the bottom side (6) at least one pair of discharge connections (24) provided on the upper side (5) and on the bottom side (6) of at least one supply channel (13, 14) is arranged at least substantially overlapping one another.

6. Distributor module according to one of claims 1 to 5,
**characterized in that**
in a projection onto the upper side (5) or the bottom side (6), at least one receiving connection (27) of at least one discharge channel (15, 16) and/or at least one discharge connection (24) of at least one supply channel (13, 14) is assigned to a corner of the distributor module (3, 4).

7. Distributor module according to one of claims 1 to 6,
**characterized in that**
at least one supply channel (13, 14) is provided with a bifurcation for dividing the supply electrolyte (8, 9) into at least two partial supply channels (18-23) carrying partial streams and/or at least one discharge channel (15, 16) is provided with a merging junction for merging the discharge electrolyte (10, 11) from partial discharge channels (28-33) carrying at least two partial streams, and that, preferably, the at least two partial supply channels (18-23) of the at least one supply channel (13, 14) and/or the at least two partial discharge channels (28-33) of the at least one discharge channel (15, 16) are arranged at least partially overlapping in a projection onto a section of the narrow side (25), in particular parallel to the top side (5) and/or the bottom side (6).

8. Distributor module according to one of claims 1 to 7,
**characterized in that**
at least one electrical conductor (41), in particular at least two electrical conductors (41), is provided for conducting the electrical current of the cell stack (1), in particular from at least one partial cell stack (2) to at least one other partial cell stack (2), through the distributor module (3, 4), in particular for connecting two end electrodes of the cell stack (1), and that electrical connections (42), in particular a plug connection, of the at least one conductor (41) are provided on the narrow side (25), the top side (5) and/or the bottom side (6) and that, preferably, at least one current measuring device (44) is assigned to the at least one conductor (41).

9. Distributor module according to one of claims 1 to 8,
**characterized in that**
in which at least one measuring sensor, in particular together with a corresponding measuring transducer, is provided, in particular in a sensor device (46), for recording a measured value, in particular pH value, conductivity, electrochemical potential, temperature, density, pressure and/or volume flow, of at least one supply electrolyte and/or discharge electrolyte in the distributor module (3,4), in particular in a sensor device (46), and/or for recording a measured value regarding the reflection, transmission and/or absorption of light by the supply electrolyte and/or discharge electrolyte in the distributor module (3, 4).

10. Distributor module according to one of claims 1 to 9,
**characterized in that**
at least one control and/or regulating device (45) is provided in the distributor module (3, 4), preferably for controlling and/or regulating the cell stack (1), in particular for controlling and/or regulating at least one pump for supply electrolyte (8, 9) and/or discharge electrolyte (10, 11), and that, preferably, the control and/or regulating device (45) is connected to the at least one current measuring device (44) and/or the at least one measuring transducer, in particular together with the at least one corresponding measuring transducer and/or at least one sensor device (46).

11. Cell stack (1) of a redox flow battery having at least one distributor module (3, 4) comprising two supply channels (13, 14) for supplying two different supply electrolytes (8, 9) to the cells (7) of the cell stack (1) and/or two discharge channels (15, 16) for discharging two separate discharge electrolytes (10, 11) from the cells (7) of the cell stack (1),
**characterized in that**
at least two partial cell stacks (2) are hydraulically connected to one another via at least one distributor module (3, 4) according to one of claims 1 to 10.

12. Cell stack according to claim 11,
**characterized in that**
at least one partial cell stack (2) is hydraulically connected to the distributor module (3, 4) via the upper side (5) of the distributor module (3, 4) and that at least one partial cell stack (2) is hydraulically connected to the distributor module (3, 4) via the narrow side (25) and/or the bottom side (6) of the distributor module (3, 4).

13. Cell stack according to claim 11 or 12,
**characterized in that**
at least two distributor modules (3, 4) are hydraulically connected to one another via corresponding receiving connections (27) and discharge connections (24) of the respectively at least two supply channels (13, 14) and/or the respectively at least two discharge channels (15, 16), and that each distributor module (3, 4) is hydraulically connected to at least one partial cell stack (2), in particular to at least two partial cell stacks (2).

14. Cell stack according to claim 13,
**characterized in that**
the at least two distributor modules (3, 4) are configured according to one of claims 1 to 10 and that, preferably, the distributor modules (3, 4) are configured similarly, in particular identically.

15. Cell stack according to any one of claims 11 to 14,
**characterized in that**
the at least two partial cell stacks (2) are connected hydraulically in parallel and/or electrically in series with one another via the at least one distributor module (3, 4).

## Revendications

1. Module de distribution (3, 4) pour relier des cellules (7) d'une pile de cellules (1) d'une batterie à flux redox, avec une face supérieure (5), une face inférieure (6) et une face étroite (25) faisant le tour du module de distribution (3, 4) entre la face supérieure (5) et la face inférieure (6) et avec deux canaux d'alimentation (13,14) pour alimenter deux électrolytes d'alimentation (8, 9) différents aux cellules (7) de la pile de cellules (1) et/ou avec deux canaux d'évacuation (15, 16) pour évacuer deux électrolytes d'évacuation (10, 11) séparés des cellules (7) de la pile de cellules (1), où les canaux d'alimentation (13, 14) et/ou les canaux d'évacuation (15, 16) sont respectivement pas déconnectés entre eux, **caractérisé en ce que**
les canaux d'alimentation (13, 14) sont respectivement configurés pour relier entre eux respectivement au moins un raccord de réception (17) pour recevoir l'électrolyte d'alimentation (8, 9) et au moins deux raccords d'évacuation (24) pour évacuer l'électrolyte d'alimentation (8, 9) à au moins deux piles de cellules partielles (2) et/ou les canaux d'évacuation (15,16) sont respectivement configurés pour relier entre eux au moins deux raccords de réception (27) pour recevoir l'électrolyte d'évacuation (10, 11) des au moins deux piles partielles de cellules (2) et au moins un raccord d'évacuation (26) pour évacuer l'électrolyte d'évacuation (10,11), que respectivement un raccord de réception (17) des canaux d'alimentation (13, 14) et/ou respectivement un raccord d'évacuation (26) des canaux d'évacuation (15, 16) sont prévus sur la face étroite (25) et que respectivement au moins un raccord d'évacuation (24) des canaux d'alimentation (13, 14) et/ou respectivement au moins un raccord de réception (27) des canaux d'évacuation (15, 16) sont prévus sur la face supérieur (5).

2. Module de distribution selon la revendication 1,
**caractérisé en ce que**
respectivement au moins un raccord d'évacuation (24) des canaux d'alimentation (13, 14) et/ou respectivement au moins un raccord de réception (27) des canaux d'évacuation (15, 16) sont prévus sur la face inférieure (6).

3. Module de distribution selon la revendication 1 ou 2,
**caractérisé en ce que**
respectivement au moins un raccord d'évacuation (24) des canaux d'alimentation (13, 14) et/ou respectivement au moins un raccord de réception (27) des canaux d'évacuation (15, 16) sont prévus sur la face étroite (25) et que, de préférence, le au moins un raccord d'évacuation (24) et le au moins un raccord de réception (17) des canaux d'alimentation (13, 14) et/ou le au moins un raccord de réception (27) et le au moins un raccord d'évacuation (26) des canaux d'évacuation (15, 16) sont prévus sur des sections opposées des faces étroites (25).

4. Module de distribution selon l'une des revendications 1 à 3,
**caractérisé en ce que**
dans une projection sur la face supérieure (5) ou la face inférieure (6), au moins un croisement (35, 37) est prévu entre respectivement deux des canaux d'alimentation (13, 14) et/ou des canaux d'évacuation (15, 16) et que, de préférence, au moins deux croisements (35, 37) sont prévus entre respectivement deux des canaux d'alimentation (13, 14) et/ou des canaux d'évacuation (15, 16), en particulier respectivement d'autres canaux d'alimentation (13014) et/ou canaux d'évacuation (15, 16).

5. Module de distribution selon l'une des revendications 1 à 4,
**caractérisé en ce que**
dans une projection sur la face supérieure (5) ou la face inférieure (6), au moins une paire de raccords de réception (27) prévus sur la face supérieure (5) et sur la face inférieure (6) d'au moins un canal d'évacuation (15,16) est arrangée au moins essentiellement chevauchant et/ou que, dans une projection sur la face supérieure (5) ou sur la face inférieure (6), au moins une paire de raccords d'évacuation (24) d'au moins un canal d'alimentation (13, 14), prévus sur la face supérieure (5) et sur la face inférieure (6), est arrangée au moins essentiellement chevauchant.

6. Module de distribution selon l'une des revendications 1 à 5,
**caractérisé en ce que**
dans une projection sur la face supérieure (5) ou la face inférieure (6), au moins un raccord de réception (27) d'au moins un canal d'évacuation (15, 16) et/ou au moins un raccord d'évacuation (24) d'au moins un canal d'alimentation (13, 14) est associé à un coin du module de distribution (3, 4).

7. Module de distribution selon l'une des revendications 1 à 6,
**caractérisé en ce que**
au moins un canal d'alimentation (13, 14) est prévu une bifurcation pour diviser l'électrolyte d'alimentation (8, 9) en canaux d'alimentation partiels (18-23) guidant au moins deux flux partiels et/ou au moins un canal d'évacuation (15, 16) est prévu une fourche de réunion pour réunir l'électrolyte d'évacuation (10, 11) provenant de canaux d'évacuation partiels (28-33) guidant au moins deux flux partiels et que, de préférence, les au moins deux canaux d'alimentation partiels (18-23) du au moins un canal d'alimentation (13, 14) et/ou les au moins deux canaux d'évacuation partiels (28-33) du au moins un canal d'évacuation (15, 16) sont disposés de manière à se chevaucher au moins partiellement dans une projection sur une section de la face étroite (25), en particulier parallèlement au face supérieur (5) et/ou au face inférieur (6).

8. Module de distribution selon l'une des revendications 1 à 7,
**caractérisé en ce que**
au moins un conducteur électrique (41), en particulier au moins deux conducteurs électriques (41), pour conduire le courant électrique de la pile de cellules (1), en particulier d'au moins une pile partielle de cellules (2) à au moins une autre pile partielle de cellules (2), à travers le module de distribution (3, 4), en particulier pour relier deux électrodes d'extrémité de la pile de cellules (1), est prévu at/ou qu'il est prévu sur la face étroite (25), le face supérieur (5) et/ou le face inférieur (6) des connexions électriques (42), en particulier une connexion enfichable, d'au moins un conducteur (41) et que, de préférence, au moins un dispositif de mesure de courant (44) est associé à au moins un conducteur (41).

9. Module de distribution selon l'une des revendications 1 à 8,
**caractérisé en ce que**
au moins un capteur de mesure, en particulier avec un transducteur de mesure correspondant, pour enregistrer une valeur de mesure, en particulier le pH, la conductivité, le potentiel électrochimique, la température, la densité, la pression et/ou le débit volumique, d'au moins un électrolyte d'alimentation et/ou d'un électrolyte d'évacuation dans le module de distribution (3,4), en particulier dans un dispositif de détection (46), et/ou pour l'enregistrement d'une valeur de mesure, concernent la réflexion, la transmission et/ou l'absorption de lumière par l'électrolyte d'alimentation et/ou l'électrolyte d'évacuation est prévu dans le module de distribution (3, 4), en particulier dans un dispositif de détection (46).

10. Module de distribution selon l'une des revendications 1 à 9,
**caractérisé en ce que**
au moins un dispositif de commande et/ou de régulation (45) est prévu dans le module de distribution (3, 4), de préférence pour commander et/ou la réguler la pile de cellules (1), en particulier pour la commande et/ou la régulation d'au moins une pompe pour l'électrolyte d'alimentation (8, 9) et/ou l'électrolyte d'évacuation (10, 11) et que, de préférence, le dispositif de commande et/ou de régulation (45) est relié à l'au moins un dispositif de mesure de courant (44) et/ou à l'au moins un capteur de mesure, en particulier conjointement avec l'au moins un transducteur de mesure correspondant et/ou au moins un dispositif de détection (46).

11. Pile de cellules (1) d'une batterie à flux redox avec au moins un module de distribution (3, 4) comprenant deux canaux d'alimentation (13, 14) pour une alimentation de deux électrolytes d'alimentation différents (8, 9) vers les cellules (7) de la pile de cellules (1) et/ou deux canaux d'évacuation (15, 16) pour une évacuation de deux électrolytes d'évacuation séparés (10, 11) des cellules (7) de la pile de cellules (1),
**caractérisé en ce que**
au moins deux piles partielles de cellules (2) sont reliées hydrauliquement entre elles par au moins un module de distribution (3, 4) selon l'une des revendications 1 à 10.

12. Pile de cellules selon la revendication 11,
**caractérisé en ce que**
au moins une pile partielle de cellules (2) est reliée hydrauliquement au module de distribution (3, 4) par la face supérieur (5) du module de distribution (3, 4) et qu'au moins une pile partielle de cellules (2) est reliée hydrauliquement au module de distribution (3, 4) par la face étroite (25) et/ou la face inférieur (6) du module de distribution (3, 4).

13. Pile de cellules selon la revendication 11 ou 12,
**caractérisé en ce que**
au moins deux modules de distribution (3, 4) sont reliés hydrauliquement entre eux par des raccords de réception (27) et de raccords d'évacuation (24) correspondants des au moins deux canaux d'alimentation (13, 14) respectifs et/ou des au moins deux canaux d'évacuation (15, 16) respectifs, et que chaque module de distribution (3, 4) est relié hydrauliquement à au moins une pile partielle de cellules (2), en particulier à au moins deux piles partielles de cellules (2).

14. Pile de cellules selon la revendication 13,
**caractérisé en ce que**
les au moins deux modules de distribution (3, 4) sont réalisés selon l'une des revendications 1 à 10 et que, de préférence, les modules de distribution (3, 4) sont de même type, en particulier identiques.

15. Pile de cellules selon l'une des revendications 11 à 14,
**caractérisé en ce que**
les au moins deux piles partielles de cellules (2) sont reliées hydrauliquement en parallèle et/ou électriquement en série entre elles par le au moins un module de distribution (3, 4).
